Europäisches Patentamt

European Patent Office

Office européen des brevets

(19)

(11) EP 0 863 487 B1

(12) FASCICULE DE BREVET EUROPEEN

(45) Date de publication et mention
de la délivrance du brevet:
**04.12.2002 Bulletin 2002/49**

(51) Int Cl.7: **G06T 5/00**

(21) Numéro de dépôt: **98400392.1**

(22) Date de dépôt: **18.02.1998**

(54) **Procédé et dispositif pour déterminer le contour de vallées d'une zone géographique déterminée et applications**

Verfahren und Vorrichtung zur Bestimmung der Konturen von Tälern in einem vorgegebenen geographischen Gebiet

Method and device for determining the valley contours of a given geographic area

(84) Etats contractants désignés:
**BE CH DE ES GB IT LI LU NL SE**

(30) Priorité: **06.03.1997 FR 9702666**

(43) Date de publication de la demande:
**09.09.1998 Bulletin 1998/37**

(73) Titulaire: **AEROSPATIALE MATRA**
**75016 Paris (FR)**

(72) Inventeurs:
• **Taupin, Christian**
**78350 Jouy En Josas (FR)**
• **Boucton, Céline**
**72000 Le Mans (FR)**
• **Epitalon, Etienne**
**75015 Paris (FR)**
• **Fritz, Coraline**
**67200 Strasbourg (FR)**

(74) Mandataire: **Bonnetat, Christian**
**CABINET BONNETAT**
**29, rue de St. Pétersbourg**
**75008 Paris (FR)**

(56) Documents cités:
**WO-A-93/04437**

• **GUILLOTEL P ET AL: "UNE METHODE DE DETECTION DU RESEAU HYDROGRAPHIQUE A PARTIR D'UN MODELE NUMERIQUE DE TERRAIN A METHOD FOR THE EXTRACTION OF A HYDROGRAPHICAL NETWORK FROM DIGITAL ELEVATION MODEL" REMOTE SENSING: ECONOMIC TOOL FOR THE NINETIES, VANCOUVER, JULY 10 - 14, 1989, vol. 2, 10 juillet 1989, INSTITUTE OF ELECTRICAL AND ELECTRONICS ENGINEERS, pages 442-445, XP000139138**
• **KWEON I S ET AL: "EXTRACTING TOPOGRAPHIC TERRAIN FEATURES FROM ELEVATION MAPS" CVGIP IMAGE UNDERSTANDING, vol. 59, no. 2, 1 mars 1994, pages 171-182, XP000439838**

**Description**

La présente invention concerne un procédé pour déterminer le contour de vallées d'une zone géographique déterminée et un dispositif pour la mise en oeuvre dudit procédé, ainsi que des applications de ce dernier.

La connaissance du contour des vallées d'une zone géographique déterminée est en particulier très utile pour des engins volants, notamment des missiles, qui se déplacent en suivi de terrain, puisque les trajets définis par lesdits contours des vallées permettent de protéger lesdits engins volants et de les rendre difficilement détectables en particulier au moyen de radars.

De tels contours de vallées peuvent notamment être utilisés lors de la préparation de la mission d'un missile de type air-sol, en permettant de définir des axes de pénétration d'une éventuelle attaque air-sol.

On notera que, pour obtenir une mise en oeuvre satisfaisante d'un tel procédé, ce dernier doit de plus pouvoir être utilisé par tout type d'engin volant, sans nécessiter de modifications trop importantes.

Aussi, la présente invention concerne un procédé pour déterminer, de façon rapide, simple, fiable et à coût réduit, le contour de vallées d'une zone géographique déterminée.

WO-A-9 304 437 décrit un système et une méthode pour former une image à trois dimensions à partir d'informations d'altitude d'un terrain. La méthode comprend les étapes suivantes:

- fournir une carte du terrain, munie de valeurs d'altitude aux points considérés;
- former un jeu de courbes à partir desdites valeurs d'altitude;
- identifier le long lesdites courbes les points qui présentent une pente différente d'un point voisin;
- former une nouvelle carte contenant uniquement ces points identifiés;
- former des pavés et des lignes dans cette nouvelle carte, lesdits pavés et lesdites lignes représentant des caractéristiques d'altitudes induites par la présence de collines ou de vallées, entre autres; et
- en déduire ladite image à trois dimensions.

A cette fin, selon l'invention, ledit procédé est remarquable en ce que :

A/ on détermine le réseau hydrographique probable de ladite zone géographique, ledit réseau hydrographique étant présenté sur une première matrice qui représente ladite zone géographique et qui comporte à chaque point de matrice, correspondant à une partie de ladite zone géographique susceptible de faire partie d'un cours d'eau, un code caractéristique désignant ledit cours d'eau ;

B/ on forme une seconde matrice qui représente ladite zone géographique et qui comporte à chaque point de matrice l'altitude de la partie correspondante de ladite zone géographique ;

C/ à partir de ladite première matrice, on détermine les affluents et les points de confluence de tous les cours d'eau dudit réseau hydrographique ;

D/ à partir de la superposition desdites première et seconde matrices, on détermine des points de vallée sur lesdites matrices, les parties de la zone géographique correspondant auxdits points de vallée étant susceptibles d'appartenir à un contour de vallée ;

E/ à partir des points de vallée ainsi déterminés, ainsi que desdits affluents et desdits points de confluence, on définit des segments de contour de vallée ; et

F/ à partir des segments ainsi définis, on forme lesdits contours des vallées.

Ainsi, grâce à l'invention, on peut déterminer facilement et de façon précise lesdits contours de vallée.

De plus, ledit procédé peut être mis en oeuvre pour tout type d'engin volant. A cet effet, certaines caractéristiques, notamment la hauteur de vol et la manoeuvrabilité, de l'engin volant considéré peuvent en particulier être prises en compte dans l'étape D/ précitée, comme on le verra ci-dessous.

En outre, de façon avantageuse :

- à l'étape A/, on détermine ledit réseau hydrographique à partir d'une unité de traitement et de visualisation cartographique qui utilise des informations issues de fichiers de données numérisées de ladite zone géographique et qui simule l'écoulement de la pluie sur le relief de ladite zone géographique ; et/ou

- à l'étape B/, on détermine ladite seconde matrice également à partir d'informations issues de fichiers de données numérisées de ladite zone géographique.

Par ailleurs, avantageusement, à l'étape C/, pour déterminer les affluents, on réalise pour chacun des cours d'eau du réseau hydrographique, les opérations suivantes :

- on prend en compte successivement chaque point de matrice de ladite première matrice muni du code dudit cours d'eau ; et

- pour chacun des points de matrice ainsi pris en compte, on réalise les opérations suivantes :

  . on définit sur ladite première matrice une zone partielle, de taille prédéfinie, centrée autour dudit point de matrice ;

  . dans ladite zone partielle, on cherche l'existence d'un point de matrice supplémentaire muni du code d'un autre cours d'eau ; et

. si un tel point de matrice supplémentaire est présent dans ladite zone partielle, on en déduit qu'il appartient à un affluent.

Dans ce cas, de façon avantageuse, un point de confluence correspond au premier desdits points de matrice pris en compte dans la recherche d'un affluent, à partir duquel on détecte un tel affluent.

De plus, selon l'invention, à l'étape D/ :

a) on détermine sur ladite première matrice les directions principales desdits cours d'eau ;

b) on superpose lesdites première et seconde matrices ; et

c) à partir de ladite superposition, pour chaque point d'eau correspondant à un point de matrice représentatif d'un cours d'eau, on réalise un balayage sur ladite seconde matrice, orthogonalement à la direction principale dudit cours d'eau audit point d'eau, successivement de part et d'autre dudit cours d'eau, en cherchant lors de ce balayage, jusqu'à une distance prédéfinie dudit point d'eau, un point de matrice comportant une altitude relative par rapport audit point d'eau comprise dans une fourchette d'altitudes prédéterminées, tout premier point de matrice ainsi détecté à partir dudit point d'eau correspondant à un point de vallée.

Dans ce cas, lorsqu'en cours du balayage d'un côté d'une direction principale d'un cours d'eau, on rencontre un cours d'eau (soit celui à partir duquel est effectuée la recherche, soit un autre cours d'eau), on arrête la recherche pour le point d'eau considéré sur ce côté de la direction principale.

On notera que ladite fourchette d'altitudes peut être définie en fonction de caractéristiques d'un engin volant, pour lequel est mis en oeuvre le procédé conforme à l'invention.

En outre, de façon avantageuse, à l'étape E/ :

a) on détermine les directions principales desdits cours d'eau ;

b) pour chacune desdites directions principales, on groupe les points de vallée adjacents à cette dernière sur un côté du cours d'eau de manière à former un ensemble de points de vallée ; et

c) pour chacun desdits ensembles de points de vallée, on détermine un segment approximant les points de vallée dudit ensemble et représentant un segment de contour de vallée.

Par ailleurs, selon l'invention, lors de la mise en oeuvre des étapes D/ et E/ précitées, pour déterminer les directions principales d'un cours d'eau, à partir de points d'eau correspondant aux points de matrice de ladite première matrice, munis du code dudit cours d'eau :

a) on détermine les deux points d'eau extrêmes dudit cours d'eau ;

b) on forme un segment à partir desdits points d'eau extrêmes ;

c) on cherche le point d'eau le plus éloigné du segment ainsi formé ;

d) on forme deux segments à partir dudit point d'eau le plus éloigné et respectivement desdits points d'eau extrêmes ; et

e) pour chacun des segments ainsi formés, on répète les opérations c), d) et e) aussi longtemps que :

. d'une part, la longueur des segments ainsi formés est supérieure à une valeur prédéfinie ; et

. d'autre part, les angles entre un segment considéré à l'étape c) et chacun des segments formés à l'étape d) suivante sont supérieurs à une valeur prédéfinie,

les segments obtenus à la fin desdites opérations répétitives représentent les directions principales dudit cours d'eau.

En outre, pour l'opération E/ précitée :

- à l'étape E/b), pour un cours d'eau considéré, on groupe les points de vallée situés à chaque fois entre deux des situations suivantes, apparaissant consécutivement :

. un début de cours d'eau ;

. un changement de direction du cours d'eau, un changement de direction correspondant au point de croisement de deux directions principales adjacentes ;

. un affluent ; et

. une fin de cours d'eau ; et/ou

- à l'étape E/c), le segment approximant les points de vallée d'un ensemble de points de vallée est déterminé par un calcul des moindres carrés. De préférence, ledit segment est limité en longueur par le contour dudit ensemble de points de vallée.

Par ailleurs, à l'étape F/ du procédé conforme à l'invention, chaque contour de vallée est formé par des tronçons de contour, et en ce que chaque tronçon de contour est obtenu à partir de deux segments de contour de vallée adjacents.

A cet effet, selon l'invention, pour former un tronçon de contour à partir de deux segments de contour de vallée adjacents, on vérifie s'ils se coupent ; et, chacun desdits segments comportant une extrémité éloignée et une extrémité proche de l'autre :

- dans le cas où ils se coupent, le tronçon de contour est formé de trois portions de droite successives, reliant respectivement l'extrémité éloignée du premier segment, l'extrémité proche du second segment, l'extrémité proche du premier segment et l'extrémité éloignée du second segment ; et

- dans le cas où ils ne se coupent pas, on détermine le point de coupe imaginaire obtenu par le prolongement fictif d'au moins l'un desdits deux segments ; et

  . si ledit point de coupe est situé sur un premier desdits segments, le tronçon de contour est formé dudit premier segment et d'une portion de droite reliant l'extrémité proche de ce premier segment à l'extrémité éloignée du second segment ; et

  . si ledit point de coupe n'est pas situé sur l'un desdits deux segments :

    ■ dans le cas où il est obtenu par le prolongement des deux extrémités proches desdits segments, le tronçon de contour est formé de ces deux segments, ainsi que d'une portion de droite reliant les extrémités proches de ces derniers ; et

    ■ dans le cas où il est obtenu par le prolongement de l'extrémité proche d'un premier segment et de l'extrémité éloignée du second segment, le tronçon de contour est formé dudit second segment et d'une portion de droite reliant l'extrémité éloignée du premier segment à l'extrémité proche du second segment.

La présente invention concerne également un dispositif pour la mise en oeuvre du procédé précité.

A cet effet, selon l'invention, ledit dispositif est remarquable en ce qu'il comporte :

- des moyens pour former ladite première matrice ;
- des moyens pour former ladite seconde matrice ;
- des moyens pour déterminer les affluents et les points de confluence des cours d'eau du réseau hydrographique ;
- des moyens pour déterminer lesdits points de vallée ;
- des moyens pour définir les segments de contour de vallée ; et
- des moyens pour former les contours de vallée.

Ainsi, grâce à l'invention, on obtient un dispositif fiable et de coût réduit.

Par ailleurs, la présente invention concerne également deux applications du procédé précité.

Une première application est relative à un procédé pour déterminer des versants. Pour ce faire, selon l'invention, lors de la mise en oeuvre du procédé précité, on détermine les bords de vallée présentant une pente supérieure à une valeur prédéfinie, les bords de vallée ainsi déterminés formant lesdits versants.

Une seconde application concerne un procédé pour déterminer des lignes de crête.

A cet effet, selon l'invention, on met en oeuvre le procédé précité, en tenant compte des caractéristiques suivantes :

- on détermine, à l'étape D/, au lieu de points de vallée, des points de crête correspondant aux points de matrice de ladite seconde matrice, présentant l'altitude la plus élevée ;
- on utilise à l'étape E/, au lieu des points de vallée, lesdits points de crête ; et
- lesdites lignes de crête correspondent aux contours formés à l'étape F/.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 illustre une première matrice conforme à l'invention et présentant le réseau hydrographique d'une zone géographique déterminée.

La figure 3 illustre une méthode de détermination d'affluents et de points de confluence à partir du réseau hydrographique de la figure 2.

Les figures 4A et 4B illustrent une méthode de détermination de la rive d'un cours d'eau principal, sur laquelle est situé un affluent.

La figure 5 montre en coupe un plan vertical illustrant le relief d'une vallée.

La figure 6 illustre une méthode de détermination des points de vallée.

La figure 7 montre une partie d'un cours d'eau, muni notamment de ses directions principales.

Les figures 8A à 8C illustrent une méthode de détermination des directions principales d'un cours d'eau.

La figure 9 illustre le résultat obtenu à partir des traitements présentés sur les figures 8A à 8C.

La figure 10 montre un cours d'eau, ainsi que les ensembles de points de vallée et les segments de contour correspondants.

Les figures 11A à 14A illustrent différentes possibilités d'agencement de paires de segments de contour adjacents.

Les figures 11B à 14B illustrent les tronçons de contour obtenus à partir des paires de segments de contour, illustrées respectivement sur les figures 11A à 14A.

Les figures 15 à 17 illustrent une méthode utilisée pour relier les tronçons de contour adjacents.

Les figures 18 et 19 montrent deux parties de relief différentes permettant d'expliciter le procédé conforme à l'invention de détermination de lignes de crête.

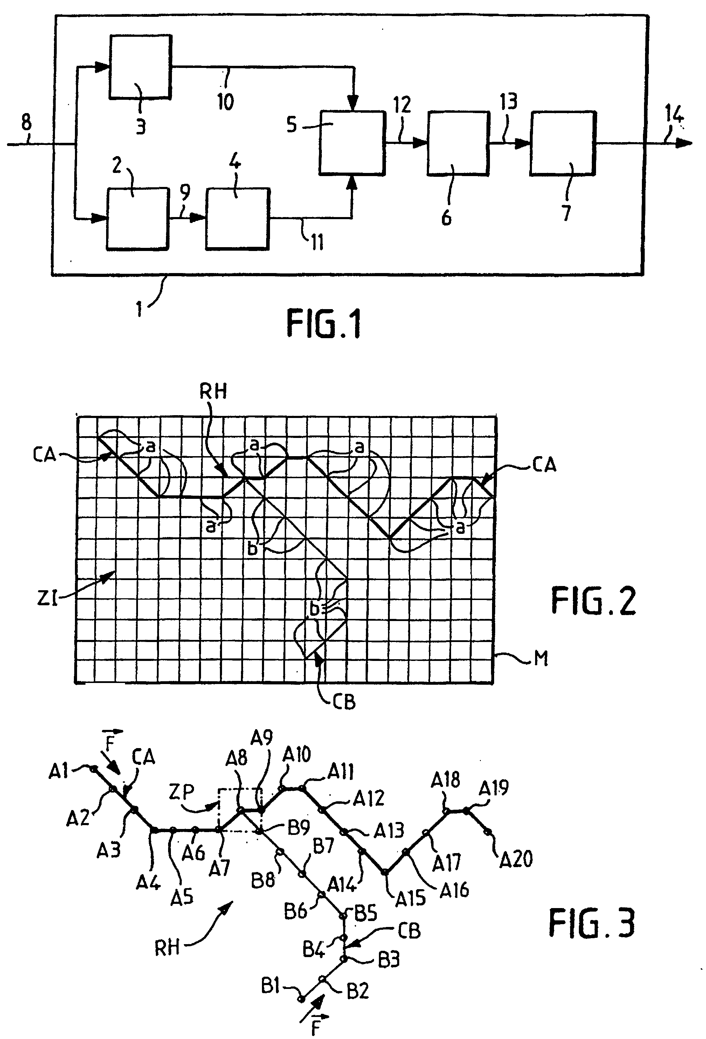

Le dispositif 1 conforme à l'invention et représenté schématiquement sur la figure 1 est destiné à déterminer de façon automatique le contour de vallées d'une zone géographique ZI déterminée.

Ce dispositif 1 peut notamment être utilisé lors de la préparation de la mission d'un engin volant non représenté, en particulier un missile, qui vole en suivi de terrain.

Plus généralement, le dispositif 1 conforme à l'invention doit pouvoir être utilisé par tout type d'engin volant, en prenant en compte simplement quelques paramètres caractéristiques dudit engin volant.

A cet effet, ledit dispositif 1 comporte, selon l'invention :

- des moyens 2 pour déterminer le réseau hydrographique RH probable de ladite zone géographique ZI, ledit réseau hydrographique RH étant présenté sur une première matrice M représentée sur la figure 2 ;
- des moyens 3 pour former une seconde matrice qui représente ladite zone géographique ZI et qui comporte à chaque point de matrice l'altitude de la partie correspondante de ladite zone géographique ZI ;
- des moyens 4 pour déterminer, à partir de ladite première matrice M, les affluents et les points de confluence de tous les cours d'eau dudit réseau hydrographique RH ;
- des moyens 5 pour déterminer, à partir desdites première et seconde matrices, des points de vallée PV sur lesdites matrices, les parties de la zone géographique correspondant auxdits points de vallée PV étant susceptibles d'appartenir à un contour de vallée ;
- des moyens 6 pour définir, à partir des points de vallée PV ainsi déterminés, ainsi que desdits affluents et desdits points de confluence, des segments T de contour de vallée ; et
- des moyens 7 pour former, à partir des segments T ainsi définis, lesdits contours CV des vallées.

Plus précisément :

- les moyens 2 sont réalisés sous forme d'une unité de traitement et de visualisation cartographique, de type connu, qui utilise des informations issues de fichiers de données numérisées non représentés, de ladite zone géographique ZI, lesdites informations *étant reçues* de ces fichiers par l'intermédiaire d'une liaison 8, et qui simule l'écoulement de la pluie sur le relief de ladite zone géographique ZI ; et
- ladite première matrice M qui est représentée sur la figure 2 illustre ladite zone géographique ZI et comporte à chaque point de matrice, correspondant à une partie de ladite zone géographique ZI susceptible de faire partie d'un cours d'eau, un code caractéristique a ou b désignant ledit cours d'eau CA ou CB. Le réseau hydrographique RH représenté sur les figures 2 et 3 de ladite zone géographique ZI comporte donc les cours d'eau CA et CB.

On notera que lesdits moyens 2 déterminent les cours d'eau probables, c'est-à-dire ceux qui sont susceptibles d'exister en fonction des caractéristiques du relief. Ils prennent donc également en compte un cours d'eau qui a engendré une vallée et qui n'existe plus actuellement. En effet, dans la mise en oeuvre de l'invention, ce n'est pas la notion d'eau qui est prépondérante, mais celle de fond de vallée.

On remarquera qu'à cet effet, des bases de données hydrographiques ne sont pas intéressantes pour la mise en oeuvre de l'invention, puisque de telles bases de données ne contiennent que les cours d'eau existants.

En outre, les moyens 3 déterminent ladite seconde matrice également à partir d'informations issues de fichiers de données numérisées de ladite zone géographique ZI et reçues par la liaison 8.

La première matrice M ainsi déterminée est transmise, par l'intermédiaire d'une liaison 9, aux moyens 4 qui déterminent les affluents et les points de confluence des cours d'eau A et B du réseau hydrographique RH.

A cet effet, lesdits moyens 4 réalisent, comme représenté sur la figure 3, pour chacun des cours d'eau CA et CB du réseau hydrographique RH, les opérations suivantes décrites ci-après pour le cours d'eau CA :

- ils prennent en compte successivement, par exemple dans le sens $\vec{F}$ d'écoulement de l'eau, chaque point de matrice A1 à A20 de ladite première matrice M, muni du code a dudit cours d'eau CA ; et
- pour chacun des points de matrice A1 à A20 ainsi pris en compte, ils réalisent les opérations suivantes :

  . ils définissent sur ladite première matrice M une zone partielle ZP, comme représenté pour le point A8, de taille prédéfinie de préférence carrée, centrée autour dudit point de matrice A8 ;
  . dans ladite zone partielle ZP, ils cherchent l'existence d'un point de matrice supplémentaire muni du code d'un autre cours d'eau, le point B9 du cours d'eau CB, qui est muni du code b, correspondant à un tel point de matrice supplémentaire, ce qui n'est pas le cas du point A7 qui présente le même code a que ledit point A8 ; et
  . si un tel point de matrice B9 supplémentaire est présent dans ladite zone partielle ZP, ils en déduisent qu'il appartient à un affluent CB.

De plus, selon l'invention, le premier desdits points A1 à A20, à partir duquel on détecte un affluent, est considéré comme point de confluence. Dans l'exemple représenté sur la figure 3, le point A8 correspond donc au point de confluence des cours d'eau CA et CB.

En outre, les moyens 4 déterminent, de plus, pour chaque affluent CB déterminé, la rive du cours d'eau CA, sur laquelle il est situé.

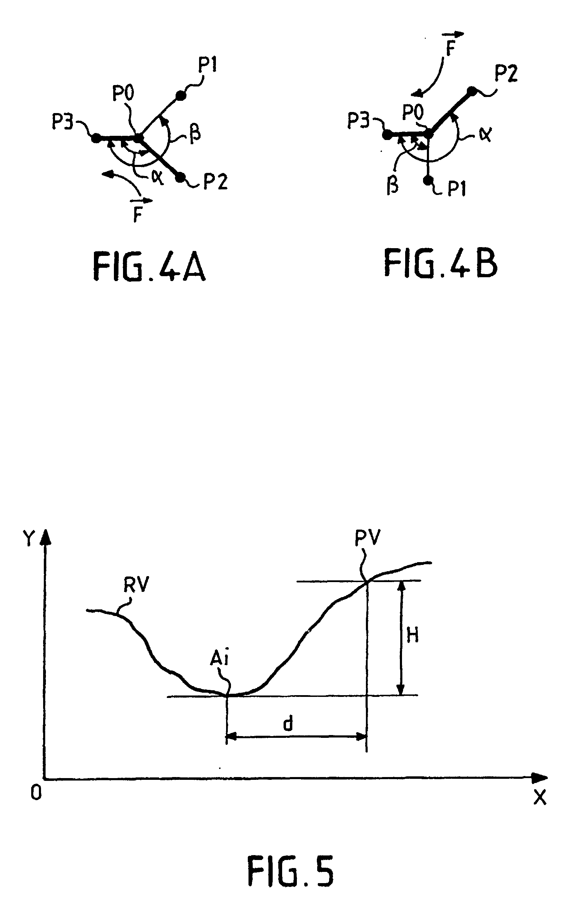

Pour ce faire, lesdits moyens 4 tiennent compte des points suivants représentés sur les figures 4A et 4B :

- le point de confluence P0, c'est-à-dire le point A8 pour l'exemple de la figure 3 ;
- un point P1 de l'affluent, par exemple le point B9 de la figure 3 ;
- un point P2 (par exemple le point A7) du cours d'eau principal, en amont du point de confluence P0 ; et
- un point P3 (par exemple le point A9) du cours d'eau principal, en aval du point de confluence P0.

Puis, ils déterminent les angles :

- $\alpha$, entre les segments P0P2 et P0P3 ; et
- $\beta$, entre les segments P0P1 et P0P3,

et ils en déduisent :

- si $\alpha$ est inférieur à $\beta$, tel que représenté sur la figure 4A, que l'affluent P0P1 est situé sur la rive droite du cours d'eau principal P2P3 ; et
- si $\alpha$ est supérieur à $\beta$, tel que représenté sur la figure 4B, que l'affluent P0P1 est situé sur la rive gauche du cours d'eau principal P2P3.

Pour déterminer les angles $\alpha$ et $\beta$, les moyens 4 calculent d'abord les vecteurs $\overrightarrow{P0P1}$, $\overrightarrow{P0P2}$ et $\overrightarrow{P0P3}$ à partir des coordonnées des points P0, P1, P2 et P3, puis ils en déduisent lesdits angles $\alpha$ et $\beta$ à partir de formules trigonométriques connues.

Par ailleurs, les moyens 5 reçoivent les informations déterminées par les moyens 3 et 4 par l'intermédiaire respectivement de liaisons 10 et 11 et ils réalisent les opérations suivantes :

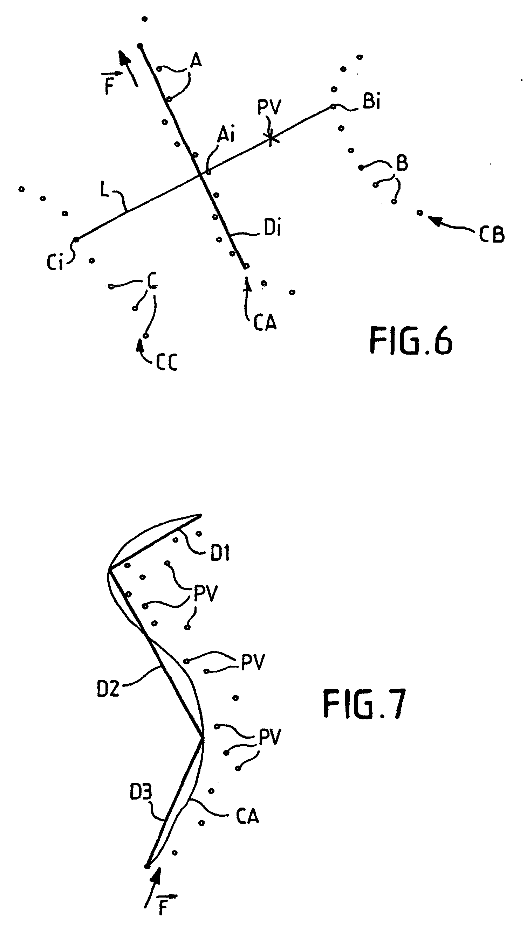

a) ils déterminent sur ladite première matrice M les directions principales Di desdits cours d'eau, comme par exemple les directions D1, D2, D3 du cours d'eau CA représenté sur la figure 7, tel que précisé ci-dessous ;

b) ils superposent lesdites première et seconde matrices ; et

c) à partir de ladite superposition, pour chaque point d'eau A correspondant à un point de matrice représentatif d'un cours d'eau, par exemple les points A1 à A20 illustrés sur la figure 3 pour le cours d'eau CA, ils réalisent un balayage sur ladite seconde matrice comme représenté pour un point Ai sur la figure 6, selon une ligne L orthogonale à la direction principale Di dudit cours d'eau CA audit point d'eau Ai, successivement de part et d'autre dudit cours d'eau CA. Lors dudit balayage sur une rive du cours d'eau CA, les moyens 5 cherchent, jusqu'à une distance prédéfinie $\underline{d}$ dudit point d'eau Ai, un point de matrice PV comportant une altitude relative H par rapport audit point d'eau Ai, comprise dans une fourchette d'altitudes prédéterminées, tout premier point de matrice PV ainsi détecté à partir du point d'eau Ai correspondant à un point de vallée, tel que représenté sur la figure 5 qui montre dans un plan vertical OXY le relief RV d'une vallée.

Ladite fourchette d'altitudes prédéterminée peut être choisie en fonction de caractéristiques (hauteur de vol, manoeuvrabilité, ...) d'un corps volant, par exemple un missile, qui compte utiliser les résultats obtenus par le dispositif 1.

On sait qu'un missile air-sol qui se déplace en suivi du terrain vole à une altitude de vol minimale pour être discret et assurer sa sécurité. Dans ce cas, il est nécessaire que l'altitude relative H soit supérieure à cette valeur minimale. Elle peut par exemple être égale à 50 mètres.

La distance prédéfinie $\underline{d}$, par exemple 2500 mètres, est choisie pour ne prendre en compte que des vallées présentant une pente importante.

En outre, lorsqu'en cours du balayage d'un côté d'une direction principale Di d'un cours d'eau CA, on rencontre un cours d'eau, par exemple le cours d'eau CC au point Ci sur la figure 6, on arrête la recherche pour le point d'eau Ai considéré sur ce côté (gauche sur la figure 6) de la direction principale Di.

On notera que :

- le cours d'eau rencontré peut également être le cours d'eau à partir duquel on fait la recherche, si celui-ci présente des changements de direction importants ;
- pour le point Ai de la figure 6, la recherche est interrompue sur le côté gauche du cours d'eau CA et sur le côté droit, la recherche a mis en évidence le point PV.

Selon l'invention, pour déterminer les directions principales d'un cours d'eau, à partir des points d'eau dudit cours d'eau, on réalise les opérations de segmentation suivantes mises en oeuvre par les moyens 5 dans l'étape a) précitée :

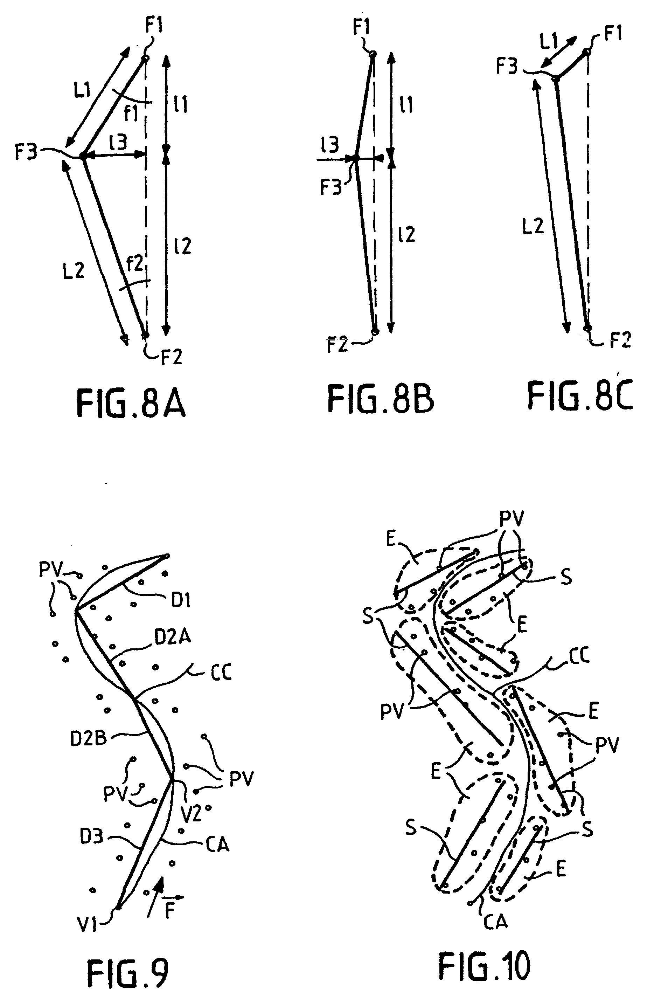

a) on détermine les deux points d'eau extrêmes F1 et F2 dudit cours d'eau, comme représenté sur la figure 8A. Si, à titre d'exemple, on prend en compte les caractéristiques du cours d'eau CA de la figure 3, lesdits points F1 et F2 correspondent respectivement aux points A1 et A20 ;

b) on forme un segment F1F2 à partir desdits points d'eau extrêmes F1 et F2 ;

c) on cherche le point d'eau F3 le plus éloigné du segment F1F2 ainsi formé ;

d) on forme deux segments F3F1 et F3F2 à partir dudit point d'eau F3 le plus éloigné et respectivement desdits points d'eau extrêmes F1 et F2 ; et

e) pour chacun des segments F3F1 et F3F2 ainsi formés, on répète les opérations c), d) et e) aussi longtemps que :

(I) d'une part, la longueur L1, L2 des segments F3F1 et F3F2 ainsi formés est supérieure à une valeur prédéfinie ; et
(II) d'autre part, les angles f1 et f2 entre un segment F1F2 considéré à l'étape c) et chacun des segments F3F1 et F3F2 formés à l'étape d) suivante sont supérieurs à une valeur prédéfinie,

les segments obtenus à la fin du traitement de segmentation représentant les directions principales dudit cours d'eau.

On notera que les angles f1 et f2 sont définis respectivement à partir des distances 11 et 13, et 12 et 13 représentées sur la figure 8A. On calcule, à cet effet, les rapports 13/11 et 13/12.

Les figures 8A, 8B et 8C illustrent trois situations différentes susceptibles de se présenter à l'étape e) précitée :

- sur la figure 8A, les conditions (I) et (II) sont remplies. Par conséquent, on répète les opérations c), d) et e) précitées à partir des segments F1F3 et F2F3 ;
- sur la figure 8B, la condition (II) n'est pas remplie, les angles f1 et f2 étant trop faibles. On arrête donc le procédé précité à ce stade de la segmentation ; et
- sur la figure 8C, la condition (I) n'est pas remplie, la distance L1 étant trop faible. De même, dans ce cas, on arrête la segmentation à ce stade du procédé.

De préférence, on fait dépendre les conditions (I) et (II) de la taille des cours d'eau considérés.

On obtient ainsi, pour chaque cours d'eau, les directions principales, comme par exemple les directions D1, D2 et D3 représentées sur la figure 7.

On doit également tenir compte des affluents de manière à pouvoir relier un segment d'un cours d'eau à celui d'un affluent à proximité d'un point de confluence, comme précisé ci-dessous. Aussi, il est nécessaire d'affiner la segmentation précitée à proximité d'un tel affluent. A cet effet, la direction D2 de la figure 7 est transformée en deux directions D2A et D2B sur la figure 9, en raison de la présence de l'affluent CC sur la rive droite.

De préférence, cette segmentation n'est prise en compte dans les traitements suivants que pour la rive (droite) correspondant à celle de l'affluent CC. Par conséquent, on peut utiliser la segmentation de la figure 7 pour les traitements concernant la rive gauche et celle de la figure 9 pour ceux concernant la rive droite.

A la fin de la recherche mise en oeuvre par les moyens 5, on obtient des points de vallée PV des deux côtés de chaque cours d'eau, comme représenté pour le côté droit du cours d'eau CA sur la figure 7.

Les moyens 5 transmettent les points de vallée PV et les directions principales ainsi déterminés, par l'intermédiaire d'une liaison 12, aux moyens 6 qui réalisent les opérations suivantes :

a) pour chacune desdites directions principales, ils groupent les points de vallée PV adjacents à cette dernière sur un côté du cours d'eau de manière à former un ensemble E de points de vallée PV ; et
b) pour chacun desdits ensembles E de points de vallée PV, ils déterminent un segment S approximant les points de vallée PV dudit ensemble E et représentant un segment de contour de vallée, tel que représenté sur la figure 10.

A cet effet, selon l'invention, pour un cours d'eau considéré, les moyens 6 groupent les points de vallée PV situés à chaque fois entre deux des situations suivantes, apparaissant consécutivement :

- un début de cours d'eau, par exemple le point V1 représenté sur la figure 9 ;
- un changement de direction du cours d'eau, par exemple le point V2 du cours d'eau CA représenté sur la figure 9, un changement de direction V2 correspondant au point de croisement de deux directions principales adjacentes ;
- un affluent, par exemple CC ; et
- une fin de cours d'eau.

Ensuite, comme indiqué précédemment, lesdits moyens 6 déterminent, pour chaque ensemble E de points de vallée PV, un segment S approximant lesdits points de vallée PV à partir d'un calcul des moindres carrés, ledit segment S étant limité en longueur par le contour dudit ensemble E.

Les segments S ainsi formés sont transmis par l'intermédiaire d'une liaison 13 aux moyens 7.

Lesdits moyens 7 forment, à chaque fois, à partir de deux segments S adjacents des tronçons de contour T qui permettront de déterminer le contour final CV d'une vallée.

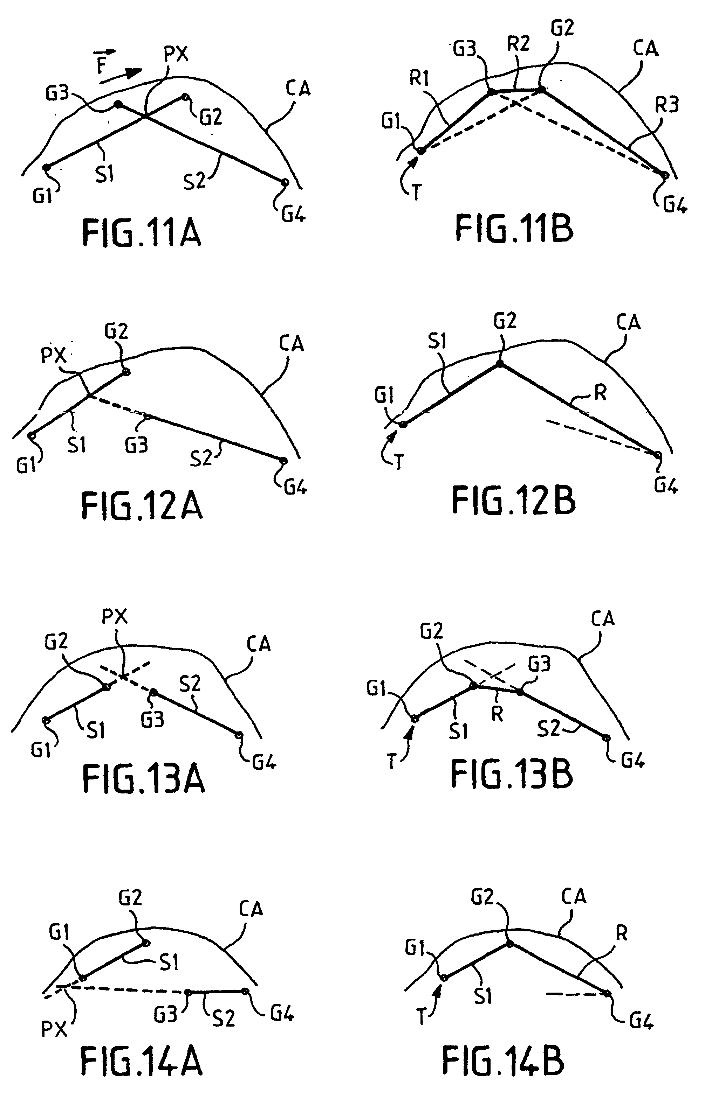

Sur les figures 11A à 14B, on a représenté différentes situations possibles pour le traitement des moyens 7. Les figures munies de l'indice A représentent la situation avant le traitement, pour deux segments adjacents S1 et S2, et les figures munies de l'indice B illustrent le tronçon T correspondant obtenu par ledit traitement.

Chacun desdits segments S1 et S2 comporte une extrémité éloignée respectivement G1 et G4 et une extrémité proche respectivement G2 et G3, de l'autre.

Plus précisément, les extrémités G1 et G2 représentent respectivement les extrémités en amont et en aval du segment S1, dans le sens $\vec{F}$ de l'écoulement de l'eau, et les extrémités G3 et G4 représentent respectivement les extrémités en amont et en aval du segment S2.

Selon l'invention, pour chaque paire de segments S1 et S2 adjacents, les moyens 7 vérifient s'ils se coupent, et :

- dans le cas où ils se coupent, comme représenté sur la figure 11A, le tronçon de contour T est formé de trois portions de droite successives R1, R2 et R3 reliant respectivement l'extrémité éloignée G1 du premier segment S1, l'extrémité proche G3 du second segment S2, l'extrémité proche G2 du premier segment S1 et l'extrémité éloignée G4 du second segment S2, comme représenté sur la figure 11B ; et
- dans le cas où ils ne se coupent pas, comme représenté sur les figures 12A, 13A et 14A, les moyens 7 déterminent le point de coupe imaginaire PX obtenu par le prolongement fictif d'au moins l'un desdits deux segments S1 et S2 ; et

  . si ledit point de coupe PX est situé sur un premier S1 desdits segments, comme représenté sur la figure 12A, le tronçon de contour T est formé dudit premier segment S1 et d'une portion de droite R reliant l'extrémité proche G2 de ce premier segment S1 à l'extrémité éloignée G4 du second segment S2, comme représenté sur la figure 12B ; et
  . si ledit point de coupe PX n'est pas situé sur l'un desdits deux segments S1 et S2 :

    ■ dans le cas où il est obtenu par le prolongement des deux extrémités proches G2 et G3 desdits segments S1 et S2, comme représenté sur la figure 13A, le tronçon de contour T est formé de ces deux segments S1 et S2, ainsi que d'une portion de droite R reliant les extrémités proches G2 et G3 de ces derniers, comme représenté sur la figure 13B ; et
    ■ dans le cas où il est obtenu par le prolongement de l'extrémité proche G3 d'un premier segment S2 et de l'extrémité éloignée G1 du second segment S1, comme représenté sur la figure 14A, le tronçon de contour T est formé dudit second segment S1 et d'une portion de droite R reliant l'extrémité éloignée G4 du premier segment S2 à l'extrémité proche G2 du second segment S1, comme représenté sur la figure 14B.

A partir des tronçons de contour T ainsi déterminés, les moyens 7 forment le contour des vallées CV, en réalisant une continuité desdits tronçons de contour T.

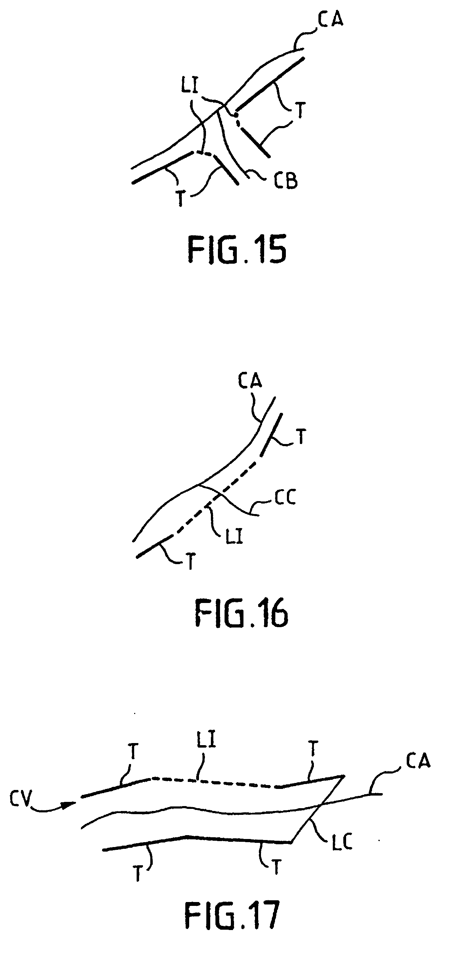

A cet effet, ils relient ensemble lesdits tronçons de contour T, notamment au niveau des affluents, comme représenté sur les figures 15 et 16.

Lorsque l'affluent CB présente également des tronçons de contour T, les lignes de liaison LI relient les tronçons T du cours d'eau principal CA à ceux dudit affluent CB au niveau du point de confluence, comme représenté sur la figure 15.

En revanche, lorsque l'affluent CC ne présente aucun tronçon de contour, les lignes de liaison LI relient directement les tronçons T du cours d'eau principal CA au niveau du point de confluence, tel que représenté sur la figure 16.

Aux extrémités du contour CV d'une vallée, la liaison est réalisée au moyen de lignes transversales LC, comme illustré sur la figure 17.

Le dispositif 1 conforme à l'invention, dont on a précisé les traitements ci-dessus, permet donc de déterminer des contours CV de vallées d'une zone géographique ZI déterminée.

Par ailleurs, d'une part, ce dispositif 1 peut être perfectionné pour déterminer de plus des versants non représentés, en recherchant les bords des vallées présentant une pente supérieure à une valeur prédéfinie, les bords de vallée ainsi déterminés formant lesdits versants.

D'autre part, ledit dispositif 1 peut être perfectionné pour déterminer des lignes de crête.

A cet effet, selon l'invention :

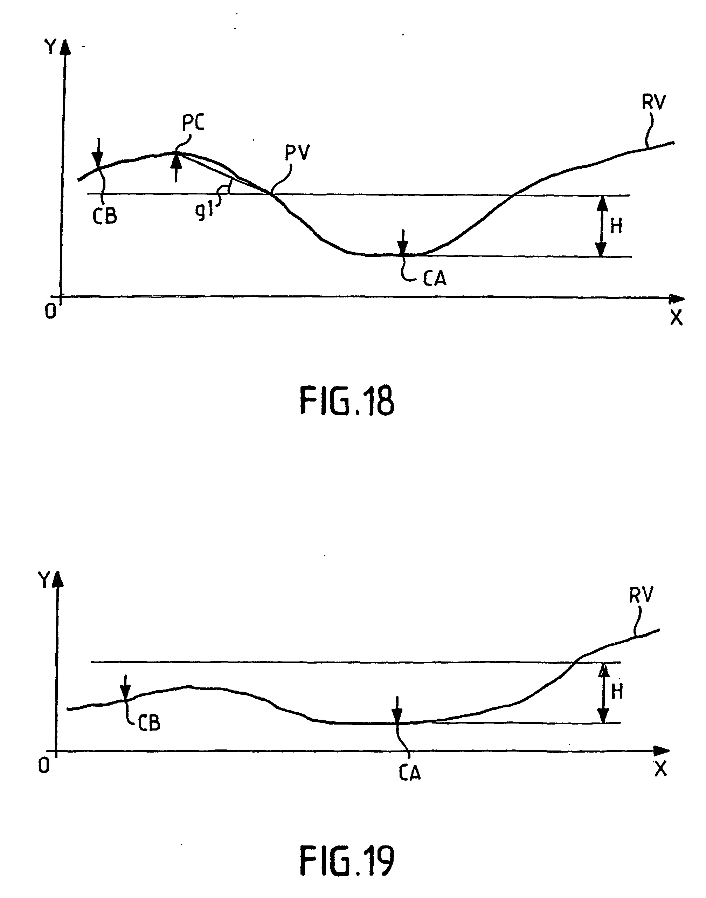

- les moyens 5 déterminent, au lieu de points de vallée PV, des points de crête PC représentés sur la figure 18 qui montre dans un plan vertical OXY le relief RV d'une vallée et correspondant aux points de matrice de ladite seconde matrice présentant l'altitude la plus élevée ;
- les moyens 6 utilisent dans leurs traitements, au lieu des points de vallée PV, lesdits points de crête PC ; et
- les contours formés par les moyens 7 représentent alors lesdites lignes de crête.

Une ligne de crête relie les points de plus haute altitude compris entre deux cours d'eau. Dans le cas où il n'existe pas de points plus élevés que ceux qui délimitent l'un des deux cours d'eau, on considère que la ligne de crête fictive est confondue avec ce cours d'eau.

En outre, un moyen de filtrage non représenté peut être intégré dans le dispositif 1 pour ne prendre en compte que les points de crête PC suffisamment caractéristiques.

Plus précisément, on considère à cet effet que l'angle g1 entre l'horizontale et la ligne formée par les points PC et PV doit être supérieure à une valeur prédéfinie, par exemple 3°, tel que représenté sur la figure 18.

En outre, lorsque, comme représenté sur la figure 19 qui montre un plan vertical OXY illustrant une partie de relief RV, il n'existe aucun point du relief RV entre deux cours d'eau CA et CB, qui présente une altitude supérieure ou égale à l'altitude H, il n'existe pas de points de crête PC, ni de points de vallée PV, entre ces deux cours d'eau CA et CB.

**Revendications**

1. Procédé pour déterminer le contour (CV) de vallées d'une zone géographique déterminée (ZI), **caractérisé en ce que** :

   A/ on détermine le réseau hydrographique (RH) probable de ladite zone géographique (ZI), ledit réseau hydrographique (RH) étant présenté sur une première matrice (M) qui représente ladite zone géographique (ZI) et qui comporte à chaque point de matrice, correspondant à une partie de ladite zone géographique (ZI) susceptible de faire partie d'un cours d'eau (A, B), un code caractéristique (a, b) désignant ledit cours d'eau (A, B) ;
   B/ on forme une seconde matrice qui représente ladite zone géographique (ZI) et qui comporte à chaque point de matrice l'altitude de la partie correspondante de ladite zone géographique (ZI) ;
   C/ à partir de ladite première matrice (M), on détermine les affluents et les points de confluence de tous les cours d'eau dudit réseau hydrographique (RH) ;
   D/ à partir de la superposition desdites première et seconde matrices, on détermine des points de vallée (PV) sur lesdites matrices, les parties de la zone géographique (ZI) correspondant auxdits points de vallée (PV) étant susceptibles d'appartenir à un contour de vallée (CV) ;
   E/ à partir des points de vallée (PV) ainsi déterminés, ainsi que desdits affluents et desdits points de confluence, on définit des segments (S) de contour de vallée ; et
   F/ à partir des segments (S) ainsi définis, on forme lesdits contours (CV) des vallées.

2. Procédé selon la revendication 1, **caractérisé en ce qu'**à l'étape A/, on détermine ledit réseau hydrographique (RH) à partir d'une unité de traitement et de visualisation cartographique qui utilise des informations issues de fichiers de données numérisées de ladite zone géographique (ZI) et qui simule l'écoulement de la pluie sur le relief de ladite zone géographique (ZI).

3. Procédé selon l'une des revendications 1 et 2, **caractérisé en ce qu'**à l'étape B/, on détermine ladite seconde matrice à partir d'informations issues de fichiers de données numérisées de ladite zone géographique (ZI).

4. Procédé selon l'une quelconque des revendications 1 à 3, **caractérisé en ce qu'**à l'étape C/, pour déterminer les affluents, on réalise pour chacun des cours d'eau (CA) du réseau hydrographique (RH), les opérations suivantes :

   - on prend en compte successivement chaque point de matrice (A1 à A20) de ladite première matrice (M) muni du code (a) dudit cours d'eau (CA) ; et
   - pour chacun des points de matrice (A1 à A20) ainsi pris en compte, on réalise les opérations suivantes :

     . on définit sur ladite première matrice (M) une zone partielle (ZP), de taille prédéfinie, centrée autour dudit point de matrice (A8) ;
     . dans ladite zone partielle (ZP), on cherche l'existence d'un point de matrice supplémentaire (B9) muni du code (b) d'un autre cours d'eau (CB) ; et
     . si un tel point de matrice supplémentaire (B9) est présent dans ladite zone partielle (ZP), on en déduit qu'il appartient à un affluent (CB).

5. Procédé selon la revendication 4, **caractérisé en ce qu'**un point de confluence correspond au premier (A8) desdits points de matrice (A1 à A20) pris en compte dans la recherche d'un affluent, à partir duquel on détecte un tel affluent (CB).

6. Procédé selon l'une quelconque des revendications 1 à 5, **caractérisé en ce qu'**à l'étape D/ :

   a) on détermine sur ladite première matrice (M) les directions principales (Di) desdits cours d'eau ;
   b) on superpose lesdites première et seconde matrices ; et
   c) à partir de ladite superposition, pour chaque point d'eau (Ai) correspondant à un point de matrice représentatif d'un cours d'eau (CA), on réalise un balayage sur ladite seconde matrice (M), orthogonalement à la direction principale (Di) dudit cours d'eau (CA) audit point d'eau (Ai), successivement de part et d'autre dudit cours d'eau (CA), en cherchant lors de ce balayage, jusqu'à une distance (d) prédéfinie dudit point d'eau (Ai), un point de matrice comportant une altitude relative (H) par rapport audit point d'eau (Ai) comprise dans une fourchette d'altitudes prédéterminées, tout premier point de matrice (PV) ainsi détecté à partir du point d'eau (Ai) correspondant à un point de vallée.

**7.** Procédé selon la revendication 6, **caractérisé en ce que**, lorsqu'en cours du balayage d'un côté d'une direction principale (Di) d'un cours d'eau (CA), on rencontre un cours d'eau (CC), on arrête la recherche pour le point d'eau (Ai) considéré sur ce côté de la direction principale (Di).

**8.** Procédé selon l'une quelconque des revendications 1 à 7, **caractérisé en ce qu'**à l'étape E/ :

a) on détermine les directions principales (D1, D2A, D2B, D3) desdits cours d'eau (CA) ;
b) pour chacune desdites directions principales (D1, D2A, D2B, D3), on groupe les points de vallée (PV) adjacents à cette dernière sur un côté du cours d'eau (CA) de manière à former un ensemble (E) de points de vallée (PV) ; et
c) pour chacun desdits ensembles (E) de points de vallée (PV), on détermine un segment (S) approximant les points de vallée (PV) dudit ensemble (E) et représentant un segment de contour de vallée.

**9.** Procédé selon l'une des revendications 6 à 8, **caractérisé en ce que**, pour déterminer les directions principales d'un cours d'eau, à partir de points d'eau correspondant aux points de matrice de ladite première matrice (M), munis du code dudit cours d'eau :

a) on détermine les deux points d'eau extrêmes (F1, F2) dudit cours d'eau ;
b) on forme un segment (F1F2) à partir desdits points d'eau extrêmes (F1, F2) ;
c) on cherche le point d'eau (F3) le plus éloigné du segment (F1F2) ainsi formé ;
d) on forme deux segments (F1F3, F2F3) à partir dudit point d'eau (F3) le plus éloigné et respectivement desdits points d'eau extrêmes (F1, F2) ; et
e) pour chacun des segments (F1F3, F2F3) ainsi formés, on répète les opérations c), d) et e) aussi longtemps que :

. d'une part, la longueur (L1, L2) des segments (F1F3, F2F3) ainsi formés est supérieure à une valeur prédéfinie ; et
. d'autre part, les angles (f1, f2) entre un segment (F1F2) considéré à l'étape c) et chacun des segments (F1F3, F2F3) formés à l'étape d) suivante sont supérieurs à une valeur prédéfinie,

les segments obtenus à la fin desdites opérations répétitives représentant les directions principales dudit cours d'eau.

**10.** Procédé selon la revendication 8, **caractérisé en ce qu'**à l'étape E/b), pour un cours d'eau considéré, on groupe les points de vallée (PV) situés à chaque fois entre deux des situations suivantes, apparaissant consécutivement :

- un début de cours d'eau ;
- un changement de direction du cours d'eau, un changement de direction correspondant au point de croisement (V2) de deux directions principales adjacentes ;
- un affluent ; et
- une fin de cours d'eau.

**11.** Procédé selon la revendication 8, **caractérisé en ce qu'**à l'étape E/c), le segment (S) approximant les points de vallée d'un ensemble (E) de points de vallée (PV) est déterminé par un calcul des moindres carrés.

**12.** Procédé selon la revendication 11, **caractérisé en ce que** ledit segment (S) est limité en longueur par le contour dudit ensemble (E) de points de vallée (PV).

**13.** Procédé selon l'une quelconque des revendications 1 à 12, **caractérisé en ce qu'**à l'étape F/, chaque contour de vallée (CV) est formé par des tronçons de contour (T), et **en ce que** chaque tronçon de contour (T) est obtenu à partir de deux segments (S) de contour de vallée adjacents.

**14.** Procédé selon la revendication 13, **caractérisé en ce que**, pour former un tronçon de contour (T) à partir de deux segments (S) de contour de vallée adjacents, on vérifie s'ils se coupent ; et, chacun desdits segments (S1, S2) comportant une extrémité éloignée (G1, G4) et une extrémité proche (G2, G3) de l'autre :

- dans le cas où ils se coupent, le tronçon de contour (T) est formé de trois portions de droite successives (R1, R2, R3) reliant respectivement l'extrémité éloignée (G1) du premier segment (S1), l'extrémité proche (G3) du second segment (S2), l'extrémité proche (G2) du premier segment (S1) et l'extrémité éloignée (G4) du second segment (S2) ; et
- dans le cas où ils ne se coupent pas, on détermine le point de coupe imaginaire (PX) obtenu par le prolongement fictif d'au moins l'un desdits deux segments (S1, S2) ; et

. si ledit point de coupe (PX) est situé sur un premier (S1) desdits segments, le tronçon de contour (T) est formé dudit premier segment (S1) et d'une portion de droite (R) reliant l'extrémité proche (G2) de ce premier segment (S1) à l'extrémité éloignée (G4) du second segment (S2) ; et

. si ledit point de coupe (PX) n'est pas situé sur l'un desdits deux segments (S1, S2) :

❖ dans le cas où il est obtenu par le prolongement des deux extrémités proches (G2, G3) desdits segments (S1, S2), le tronçon de contour (T) est formé de ces deux segments (S1, S2), ainsi que d'une portion de droite (R) reliant les extrémités proches (G2, G3) de ces derniers ; et

❖ dans le cas où il est obtenu par le prolongement de l'extrémité proche (G3) d'un premier segment (52) et de l'extrémité éloignée (G1) du second segment (S1), le tronçon de contour (T) est formé dudit second segment (S1) et d'une portion de droite (R) reliant l'extrémité éloignée (G4) du premier segment (S2) à l'extrémité proche (G2) du second segment (S1).

15. Dispositif pour déterminer le contour (CV) de vallées d'une zone géographique déterminée (ZI), ledit dispositif comportant des moyens (3) pour former une seconde matrice qui représente ladite zone géographique (ZI) et qui comporte à chaque point de matrice l'altitude de la partie correspondante de ladite zone géographique (ZI), **caractérisé en ce qu'**il comporte de plus :

- des moyens (2) pour déterminer le réseau hydrographique (RH) probable de ladite zone géographique (ZI), ledit réseau hydrographique (RH) étant présenté sur une première matrice (M) qui représente ladite zone géographique (ZI) et qui comporte à chaque point de matrice, correspondant à une partie de ladite zone géographique (ZI) susceptible de faire partie d'un cours d'eau (A, B), un code caractéristique (a, b) désignant ledit cours d'eau (A, B) ;
- des moyens (4) pour déterminer, à partir de ladite première matrice (M), les affluents et les points de confluence de tous les cours d'eau dudit réseau hydrographique (RH) ;
- des moyens (5) pour déterminer, à partir de la superposition desdites première et seconde matrices, des points de vallée (PV) sur lesdites matrices, les parties de la zone géographique (ZI) correspondant auxdits points de vallée (PV) étant susceptibles d'appartenir à un contour de vallée (CV) ;
- des moyens (6) pour définir, à partir des points de vallée (PV) ainsi déterminés, ainsi que desdits affluents et desdits points de confluence, des segments (S) de contour de vallée ; et
- des moyens (7) pour former, à partir des segments (S) ainsi définis, lesdits contours (CV) des vallées.

16. Procédé pour déterminer des versants, **caractérisé en ce que** :

- on détermine le contour de vallées d'une zone géographique déterminée, en mettant en oeuvre le procédé spécifié sous l'une quelconque des revendications 1 à 14 ; et
- à partir des contours de vallée ainsi déterminés, on détermine les bords de vallée présentant une pente supérieure à une valeur prédéfinie, les bords de vallée ainsi déterminés formant lesdits versants.

17. Procédé pour déterminer des lignes de crête, **caractérisé en ce que** l'on met en oeuvre le procédé spécifié sous l'une quelconque des revendications 1 à 14, en tenant compte des caractéristiques suivantes :

- on détermine, à l'étape D/, au lieu de points de vallée (PV), des points de crête (PC) correspondant aux points de matrice de ladite seconde matrice, présentant l'altitude la plus élevée ;
- on utilise à l'étape E/, au lieu des points de vallée (PV), lesdits points de crête (PC) ; et
- lesdites lignes de crête correspondent aux contours formés à l'étape F/.

**Patentansprüche**

1. Verfahren zur Bestimmung der Kontur von Tälern (CV) eines bestimmten geographischen Bereichs (ZI), **dadurch gekennzeichnet, dass**:

A/ das wahrscheinliche hydrographische Netz (RH) des geographischen Bereichs (ZI) bestimmt wird, wobei das hydrographische Netz (RH) auf einer ersten Matrize (M) vorliegt, die den geographischen Bereich (ZI) wiedergibt und an jedem Matrizenpunkt, der einem Teil des geographischen Bereichs entspricht, der Teil eines Wasserlaufs (A, B) sein kann, einen charakteristischen Kode (a, b) aufweist, der den Wasserlauf (A, B) bezeichnet;
B/ eine zweite Matrize gebildet wird, die den geographischen Bereich (ZI) wiedergibt und die an jedem Matrizenpunkt die Höhe des entsprechenden Teils des geographischen Bereichs (ZI) umfasst;
C/ auf der Basis der ersten Matrize (M) die Zuflüsse und die Zusammenflusspunkte aller Wasserläufe des hydrographischen Netzes (RH) bestimmt werden;

D/ auf der Basis der Überlagerung der ersten und zweiten Matrize Talpunkte (PV) auf den Matrizen bestimmt werden, wobei die Teile des geographischen Bereichs (ZI), die den Talpunkten (PV) entsprechen, einer Talkontur (CV) angehören können;

E/ auf der Basis der so bestimmten Talpunkte (PV) sowie der Zuflüsse und der Zusammenflusspunkte Segmente (S) der Talkontur definiert werden; und

F/ auf der Basis der so definierten Segmente (S) die Konturen (CV) der Täler gebildet werden.

2. Verfahren nach Anspruch 1, **dadurch gekennzeichnet, dass** bei Schritt A/ das hydrographische Netz (RH) auf der Basis einer kartographischen Verarbeitungs- und Visualisierungseinheit bestimmt wird, die von Dateien numerischer Daten des geographischen Bereichs (ZI) stammende Informationen verwendet und die das Fließen des Regens auf dem Relief des geographischen Bereichs (ZI) simuliert.

3. Verfahren nach einem der Ansprüche 1 und 2, **dadurch gekennzeichnet, dass** bei Schritt B/ die zweite Matrize auf der Basis von aus Dateien numerischer Daten des geographischen Bereichs (ZI) stammenden Informationen bestimmt wird.

4. Verfahren nach einem der Ansprüche 1 bis 3, **dadurch gekennzeichnet, dass** bei Schritt C/ zur Bestimmung der Zuflüsse für jeden Wasserlauf (CA) des hydrographischen Netzes (RH) folgende Operationen ausgeführt werden:

  - nacheinander wird jeder Matrizenpunkt (A1 bis A20) der ersten Matrize (M), der mit dem Kode (a) des Wasserlaufs (CA) versehen ist, einbezogen; und
  - für jeden der so einbezogenen Matrizenpunkte (A1 bis A20) werden folgende Operationen durchgeführt:

    . auf der ersten Matrize (M) wird ein Teilbereich (ZP) vorbestimmter Größe definiert, der um den Matrizenpunkt (A8) zentriert ist;
    . in dem Teilbereich (ZP) wird nach dem Vorhandensein eines zusätzlichen Matrizenpunkts (B9) gesucht, der mit dem Kode (b) eines anderen Wasserlaufs (CB) versehen ist; und
    . falls ein derartiger zusätzliche Matrizenpunkt (B9) in dem Teilbereich (ZP) vorhanden ist, wird daraus gefolgert; dass er zu einem Zufluss (CB) gehört.

5. Verfahren nach Anspruch 4, **dadurch gekennzeichnet, dass** ein Zusammenflusspunkt dem ersten (A8) der Matrizenpunkte (A1 bis A20) entspricht, die bei der Suche eines Zuflusses einbezogen werden, auf Basis dessen ein derartiger Zufluss (CB) erfasst wird.

6. Verfahren nach einem der Ansprüche 1 bis 5, **dadurch gekennzeichnet, dass** bei Schritt D/:

    a) auf der ersten Matrize (M) die Hauptrichtungen (Di) der Wasserläufe bestimmt werden;
    b) die erste und zweite Matrize überlagert werden; und
    c) auf der Basis der Überlagerung für jeden Wasserpunkt (Ai), der einem für einen Wasserlauf (CA) repräsentativen Matrizenpunkt entspricht, eine Abtastung auf der zweiten Matrize senkrecht zur Hauptrichtung (Di) des Wasserlaufs (CA) am Wasserpunkt (Ai) nacheinander auf beiden Seiten des Wasserlaufs (CA) durchgeführt wird, wobei während dieser Abtastung bis zu einer vordefinierten Entfernung (d) von dem Wasserpunkt (Ai) ein Matrizenpunkt gesucht wird, der eine relative Höhe (H) bezüglich des Wasserpunktes (Ai) aufweist, die in einer vorbestimmten Spanne von Höhen enthalten ist, wobei jeder so ab dem Wasserpunktes (Ai) erfasste erste Matrizenpunkt (PV) einem Talpunkt entspricht.

7. Verfahren nach Anspruch 6, **dadurch gekennzeichnet, dass**, wenn während der Abtastung auf einer Seite einer Hauptrichtung (Di) eines Wasserlaufs (CA) ein Wasserlauf (CC) angetroffen wird, die Suche für den betreffenden Wasserpunkt (Ai) auf dieser Seite der Hauptrichtung (Di) abgebrochen wird.

8. Verfahren nach einem der Ansprüche 1 bis 7, **dadurch gekennzeichnet, dass** bei Schritt E/:

    a) die Hauptrichtungen (D1, D2A, D2B, D3) der Wasserläufe (CA) bestimmt werden;
    b) für jede der Hauptrichtungen (D1, D2A, D2B, D3) die Talpunkte (PV), die an diese letztere auf einer Seite des Wasserlaufs (CA) angrenzen, zusammengefasst werden, um so ein Ensemble (E) von Talpunkten (PV) zu bilden; und
    c) für jedes der Ensemble (E) von Talpunkten (PV) ein Segment (S) bestimmt wird, das die Talpunkte (PV) des Ensembles (E) approximiert und ein Talkontursegment darstellt.

9. Verfahren nach einem der Ansprüche 6 bis 8, **dadurch gekennzeichnet, dass** zur Bestimmung der Hauptrichtungen eines Wasserlaufs auf der Basis der Wasserpunkte, die den Matrizenpunkten der ersten Matrize (M) entsprechen, die mit dem Kode des Wasserlaufs versehen sind:

a) die zwei extremen Wasserpunkte (F1, F2) des Wasserlaufs bestimmt werden;

b) auf der Basis der extremen Wasserpunkte (F1, F2) ein Segment (F1F2) gebildet wird;

c) der von dem so gebildeten Segment (F1F2) am weitesten entfernte Wasserpunkt (F3) gesucht wird;

d) auf der Basis des am weitesten entfernten Wasserpunkts (F3) und jeweils der extremen Wasserpunkte (F1, F2) zwei Segmente (F1F3, F2F3) gebildet werden; und

e) für jedes der so gebildeten Segmente (F1F3, F2F3) die Operationen c), d) und e) so lange wiederholt werden, bis:

. einerseits die Länge (L1, L2) der so gebildeten Segmente (F1F3, F2F3) größer als ein vordefinierter Wert ist; und

. andererseits die Winkel (f1, f2) zwischen einem bei Schritt c) betrachteten Segment (F1F2) und jedem der beim folgenden Schritt d) gebildeten Segmente (F1F3, F2F3) größer als ein vordefinierter Wert sind,

wobei die am Ende der wiederholten Operationen erhaltenen Segmente die Hauptrichtungen des Wasserlaufs darstellen.

**10.** Verfahren nach Anspruch 8, **dadurch gekennzeichnet, dass** bei Schritt E/b) für einen betreffenden Wasserlauf die Talpunkte (PV) zusammengefasst werden, die jedes Mal zwischen zwei der folgenden, hintereinander auftretenden Situationen liegen:

- ein Beginn eines Wasserlaufs;
- ein Richtungswechsel des Wasserlaufs, wobei ein Richtungswechsel dem Kreuzungspunkt (V2) zweier benachbarter Hauptrichtungen entspricht;
- ein Zufluss; und
- ein Ende eines Wasserlaufs.

**11.** Verfahren nach Anspruch 8, **dadurch gekennzeichnet, dass** bei Schritt E/c) das die Talpunkte eines Ensembles (E) von Talpunkten (PV) approximierende Segment (S) durch eine Berechnung kleinster Quadrate bestimmt wird.

**12.** Verfahren nach Anspruch 11, **dadurch gekennzeichnet, dass** das Segment (S) in der Länge durch die Kontur des Ensembles (E) von Talpunkten (PV) begrenzt wird.

**13.** Verfahren nach einem der Ansprüche 1 bis 12, **dadurch gekennzeichnet, dass** bei Schritt F/ jede Talkontur (CV) durch Konturabschnitte (T) gebildet wird, und dass jeder Konturabschnitt (T) auf der Basis zweier benachbarter Talkontursegmente (S) erhalten wird.

**14.** Verfahren nach Anspruch 13, **dadurch gekennzeichnet, dass** zur Bildung eines Konturabschnitts (T) auf der Basis von zwei benachbarten Talkontursegmenten (S), geprüft wird, ob sie sich schneiden; und, wobei jedes der Segmente (S1, S2) ein vom anderen Segment entferntes Ende (G1, G4) und ein nahes Ende (G2, G3) umfasst:

- für den Fall, dass sie sich schneiden, wird der Konturabschnitt (T) aus drei aufeinanderfolgenden Teilen von Geraden (R1, R2, R3) gebildet, die jeweils das entfernte Ende (G1) des ersten Segments (S1), das nahe Ende (G3) des zweiten Segments (S2), das nahe Ende (G2) des ersten Segments (S1) und das entfernte Ende (G4) des zweiten Segments (S2) verbinden; und

- für den Fall dass sie sich nicht schneiden, wird der imaginäre Schnittpunkt (PX) bestimmt, der durch die fiktive Verlängerung zumindest eines der zwei Segmente (S1, S2) erhalten wird; und

. falls der Schnittpunkt (PX) auf einem ersten (S1) der Segmente liegt, wird der Konturabschnitt (T) aus dem ersten Segment (S1) und einem Geradenteil (R) gebildet, der das nahe Ende (G2) dieses ersten Segments (S1) mit dem entfernten Ende (G4) des zweiten Segments (S2) verbindet; und

. falls der Schnittpunkt (PX) nicht auf einem der zwei Segmente (S1, S2) liegt:

♦ für den Fall, dass er durch die Verlängerung der zwei nahen Enden (G2, G3) der Segmente (S1, S2) erhalten wird, wird der Konturabschnitt (T) aus diesen zwei Segmenten (S1, S2) gebildet, sowie aus einem Geradenteil (R), der die zwei nahen Enden (G2, G3) dieser letzteren verbindet; und

♦ für den Fall, dass er durch die Verlängerung des nahen Endes (G3) eines ersten Segments (S2) und des entfernten Endes (G1) des zweiten Segments (S2) erhalten wird, wird der Konturabschnitt (T) aus dem zweiten Segment (S1) und einem Geradenteil (R) gebildet, der das entfernte Ende (G4) des ersten Segments (S2) mit dem nahen Ende (G2) des zweiten Segments (S1) verbindet.

**15.** Vorrichtung zur Bestimmung der Kontur (CV) von Tälern eines bestimmten geographischen Bereichs (ZI), wobei die Vorrichtung Mittel (3) zum Bilden einer zweiten Matrize umfasst, die den geographischen Bereich (ZI) wiedergibt und die an jedem Matrizenpunkt die Höhe des entsprechenden Teils des geographischen Bereichs (ZI) umfasst, **dadurch gekennzeichnet, dass** sie zudem umfasst:

- Mittel (2), um das wahrscheinliche hydrographische Netz (RH) des geographischen Bereichs (ZI) zu bestimmen, wobei das hydrographische Netz (RH) auf einer ersten Matrize (M) vorliegt, die den geographischen Bereich (ZI) wiedergibt und die an jedem Matrizenpunkt, der einem Teil des geographischen Bereichs entspricht, der imstande ist, Teil eines Wasserlaufs (A, B) zu sein, einen charakteristischen Kode (a, b) aufweist, der den Wasserlauf (A, B) bezeichnet;
- Mittel (4) auf der Basis der ersten Matrize (M) die Zuflüsse und die Zusammenflusspunkte aller Wasserläufe des hydrographischen Netzes (RH) zu bestimmen;
- Mittel (5), um auf der Basis der Überlagerung der ersten und zweiten Matrize die Talpunkte (PV) auf den Matrizen zu bestimmen, wobei die Teile des geographischen Bereichs (ZI), die den Talpunkten (PV) entsprechen, imstande sind, einer Talkontur (CV) anzugehören;
- Mittel (6), um auf der Basis der so bestimmten Talpunkte (PV) sowie der Zuflüsse und der Zusammenflusspunkte Segmente (S) der Talkontur zu definieren; und
- Mittel (7), um auf der Basis der so definierten Segmente (S) die Konturen (CV) der Täler zu bilden.

**16.** Verfahren zur Bestimmung von Hängen, **dadurch gekennzeichnet, dass**:

- die Kontur von Tälern eine bestimmte geographischen Bereichs bestimmt wird, indem das unter einem der Ansprüche 1 bis 14 spezifizierte Verfahren eingesetzt wird; und
- auf der Basis der so bestimmten Talkonturen die Ränder der Täler bestimmt werden, die eine Steigung aufweisen, die größer als ein vordefinierter Wert ist,

wobei die so bestimmten Talränder die Hänge bilden.

**17.** Verfahren zur Bestimmung von Kammlinien, **dadurch gekennzeichnet, dass** das unter einem der Ansprüche 1 bis 14 spezifizierte Verfahren eingesetzt wird, unter Berücksichtigung folgender Merkmale:

- bei Schritt D/ werden anstelle der Talpunkte (PV) Kammpunkte (PC) bestimmt, die Matrizenpunkten der zweiten Matrize entsprechen, die die höchste Höhe aufweisen;
- bei Schritt E/ werden anstelle der Talpunkte (PV) die Kammpunkte (PC) verwendet; und
- die Kammlinien entsprechen den bei Schritt F/ gebildeten Konturen.

## Claims

**1.** Process for determining the contour (CV) of valleys of a specified geographical area (ZI), **characterized in that**:

A/ the probable hydrographic net (RH) of the said geographical area (ZI) is determined, the said hydrographic net (RH) being presented in a first matrix (M) which represents the said geographical area (ZI) and which includes at each matrix point, corresponding to a part of the said geographical area (ZI) liable to form part of a watercourse (A, B), a characteristic code (a, b) designating the said watercourse (A, B);

B/ a second matrix is formed which represents the said geographical area (ZI) and which includes at each matrix point the altitude of the corresponding part of the said geographical area (ZI) ;

C/ the tributaries and the points of confluence of all the watercourses of the said hydrographic net (RH) are determined from the said first matrix (M) ;

D/ valley points (PV) are determined in the said matrices from the superposition of the said first and second matrices, the parts of the geographical area (ZI) corresponding to the said valley points (PV) being liable to belong to a valley contour (CV) ;

E/ valley contour segments (S) are defined on the basis of the valley points (PV) thus determined, as well as of the said tributaries and the said points of confluence; and

F/ the said valley contours (CV) are formed on the basis of the segments (S) thus defined.

**2.** Process according to Claim 1, **characterized in that** in step A/, the said hydrographic net (RH) is determined using a map display and processing unit which uses information from digitized data files of the said geographical area (ZI) and which simulates the flow of rain over the relief of the said geographical area (ZI).

3. Process according to either of Claims 1 and 2, **characterized in that** in step B/, the said second matrix is determined from information from digitized data files of the said geographical area (ZI).

4. Process according to any one of Claims 1 to 3, **characterized in that** in step C/, in order to determine the tributaries, the following operations are carried out for each of the watercourses (CA) of the hydrographic net (RH):

   - each matrix point (A1 to A20) of the said first matrix (M) labelled with the code (a) of the said watercourse (CA) is taken into account in succession; and
   - for each of the matrix points (A1 to A20) thus taken into account, the following operations are carried out:

      . a partial area (ZP), of predefined size, centred about the said matrix point (A8) is defined in the said first matrix (M);
      . the existence of an additional matrix point (B9) labelled with the code (b) of another watercourse (CB) is searched for within the said partial area (ZP); and
      . if such an additional matrix point (B9) is present in the said partial area (ZP), it is deduced therefrom that it belongs to a tributary (CB).

5. Process according to Claim 4, **characterized in that** a point of confluence corresponds to the first (A8) of the said matrix points (A1 to A20) taken into account in the search for a tributary, on the basis of which such a tributary (CB) is detected.

6. Process according to any one of Claims 1 to 5, **characterized in that** in step D/:

   a) the principal directions (Di) of the said watercourses are determined in the said first matrix (M);
   b) the said first and second matrices are superimposed; and
   c) on the basis of the said superposition, for each water point (Ai) corresponding to a matrix point representative of a watercourse (CA), a sweep is carried out over the said second matrix (M), orthogonally to the principal direction (Di) of the said watercourse (CA) at the said water point (Ai), in succession on either side of the said watercourse (CA), while searching during this sweep, up to a predefined distance (d) from the said water point (Ai), for a matrix point having a relative altitude (H) with respect to the said water point (Ai) which lies within a predetermined altitude bracket, any first matrix point (PV) thus detected on the basis of the water point (Ai) corresponding to a valley point.

7. Process according to Claim 6, **characterized in that**, when a watercourse (CC) is encountered in the course of the sweep on one side of a principal direction (Di) of a watercourse (CA), the search for the water point (Ai) considered on this side of the principal direction (Di) is halted.

8. Process according to any one of Claims 1 to 7, **characterized in that** in step E/:

   a) the principal directions (D1, D2A, D2B, D3) of the said watercourses (CA) are determined;
   b) for each of the said principal directions (D1, D2A, D2B, D3), the valley points (PV) adjacent to this latter on one side of the watercourse (CA) are grouped together so as to form a set (E) of valley points (PV); and
   c) for each of the said sets (E) of valley points (PV), a segment (S) is determined which approximates the valley points (PV) of the said set (E) and represents a valley contour segment.

9. Process according to one of Claims 6 to 8, **characterized in that**, in order to determine the principal directions of a watercourse, on the basis of water points corresponding to the matrix points of the said first matrix (M) which are labelled with the code of the said watercourse:

   a) the two extreme water points (F1, F2) of the said watercourse are determined;
   b) a segment (F1F2) is formed on the basis of the said extreme water points (F1, F2);
   c) a search is made for the water point (F3) furthest from the segment (F1F2) thus formed;
   d) two segments (F1F3, F2F3) are formed on the basis of the said furthest water point (F3) and of the said extreme water points (F1, F2) respectively; and
   e) for each of the segments (F1F3, F2F3) thus formed, the operations c), d) and e) are repeated as long as:

      . on the one hand, the length (L1, L2) of the segments (F1F3, F2F3) thus formed is greater than a predefined value; and
      . on the other hand, the angles (f1, f2) between a segment (F1F2) considered in step c) and each of the segments (F1F3, F2F3) formed in the succeeding step d) are greater than a predefined value,

   the segments obtained at the end of the said repetitive operations representing the principal directions of the said watercourse.

10. Process according to Claim 8, **characterized in that**, in step E/b), for a watercourse considered, the valley points (PV) which on each occasion are situated between two of the following situations, appearing consecutively, are grouped together:

   - a start of watercourse;
   - a change of direction of the watercourse, a change of direction corresponding to the crossover point (V2) of two adjacent principal directions;
   - a tributary; and
   - an end of watercourse.

11. Process according to Claim 8, **characterized in that** in step E/c), the segment (S) which approximates the valley points of a set (E) of valley points (PV) is determined through a least squares computation.

12. Process according to Claim 11, **characterized in that** the said segment (S) is limited in length by the contour of the said set (E) of valley points (PV).

13. Process according to any one of Claims 1 to 12, **characterized in that** in step F/, each valley contour (CV) is formed by contour pieces (T), and **in that** each contour piece (T) is obtained from two adjacent valley contour segments (S).

14. Process according to Claim 13, **characterized in that**, in order to form a contour piece (T) from two adjacent valley contour segments (S), a check is made as to whether they intersect; and, each of the said segments (S1, S2) containing an end (G1, G4) far from and an end (G2, G3) near to the other:

   - in the case in which they intersect, the contour piece (T) is formed from three successive straight-line portions (R1, R2, R3) which respectively join the far end (G1) of the first segment (S1), the near end (G3) of the second segment (S2), the near end (G2) of the first segment (S1) and the far end (G4) of the second segment (S2); and
   - in the case in which they do not intersect, the imaginary point of intersection (PX) is determined, obtained by fictitiously extending at least one of the said two segments (S1, S2); and

     . if the said point of intersection (PX) lies on a first (S1) of the said segments, the contour piece (T) is formed of the said first segment (S1) and of a straight-line portion (R) joining the near end (G2) of this first segment (S1) to the far end (G4) of the second segment (S2); and

   . if the said point of intersection (PX) does not lie on one of the said two segments (S1, S2) :

   ■ in the case in which it is obtained by extending the two near ends (G2, G3) of the said segments (S1, S2), the contour piece (T) is formed of these two segments (S1, S2), together with a straight-line portion (R) joining the near ends (G2, G3) of these segments; and
   ■ in the case in which it is obtained by extending the near end (G3) of a first segment (S2) and the far end (G1) of the second segment (S1), the contour piece (T) is formed of the said second segment (S1) and of a straight-line portion (R) joining the far end (G4) of the first segment (S2) to the near end (G2) of the second segment (S1).

15. Device for determining the contour (CV) of valleys of a specified geographical area (ZI), the said device comprising means (3) for forming a second matrix which represents the said geographical area (ZI) and which includes at each matrix point the altitude of the corresponding part of the said geographical area (ZI), **characterized in that** it additionally comprises:

   - means (2) for determining the probable hydrographic net (RH) of the said geographical area (ZI), the said hydrographic net (RH) being presented on a first matrix (M) which represents the said geographical area (ZI) and which includes at each matrix point, corresponding to a part of the said geographical area (ZI) liable to form part of a watercourse (A, B), a characteristics code (a, b) designating the said watercourse (A, B);
   - means (4) for determining, from the said first matrix M, the tributaries and the points of confluence of all the watercourses of the said hydrographic net (RH);
   - means (5) for determining, from the superposition of the said first and second matrices, valley points (PV) in the said matrices, the parts of the geographical area (ZI) corresponding to the said valley points (PV) being liable to belong to a valley contour (CV) ;
   - means (6) for defining, on the basis of the valley points (PV) thus determined, and also of the said tributaries and the said points of confluence, valley contour segments (S); and
- means (7) for forming, from the segments (S) thus defined, the said contours (CV) of the valleys.

16. Process for determining inclines, **characterized in that**:

- the contour of valleys of a specified geographical area is determined by implementing the process specified under any one of Claims 1 to 14; and
- on the basis of the valley contours thus determined, the valley walls are determined which exhibit a slope greater than a predefined value, the valley walls thus determined forming the said inclines.

17. Process for determining ridge lines, **characterized in that** the process specified under any one of Claims 1 to 14 is implemented, taking into account the following characteristics:

- in step D/, ridge points (PC) corresponding to the matrix points of the said second matrix, exhibiting the highest altitude, are determined instead of valley points (PV);
- the said ridge points (PC) are used in step E/ instead of the valley points (PV); and
- the said ridge lines correspond to the contours formed in step F/.

EP 0 863 487 B1

FIG.1

FIG.2

FIG.3

18

EP 0 863 487 B1

FIG.4A

FIG.4B

FIG.5

19

EP 0 863 487 B1

FIG.6

FIG.7

20

FIG.8A

FIG.8B

FIG.8C

FIG.9

FIG.10

FIG.11A

FIG.11B

FIG.12A

FIG.12B

FIG.13A

FIG.13B

FIG.14A

FIG.14B

FIG.15

FIG.16

FIG.17

EP 0 863 487 B1

FIG.18

FIG.19

24